# EUROPÄISCHE PATENTSCHRIFT

(11) **EP 4 309 910 B1**
(45) Veröffentlichungstag und Bekanntmachung des Hinweises auf die Patenterteilung: **17.07.2024**
(21) Anmeldenummer: 23185191.6
(22) Anmeldetag: 13.07.2023
(51) Int. Cl.: B42C 19/08

(54) **VORRICHTUNG ZUR HERSTELLUNG EINES KLEBEGEBUNDENEN DRUCKPRODUKTS MIT EINEM TRANSPORTSYSTEM**
DEVICE FOR PRODUCING AN ADHESIVE-BOUND PRINTED PRODUCT WITH A TRANSPORT SYSTEM
DISPOSITIF DE FABRICATION D'UN PRODUIT IMPRIMÉ RELIÉ PAR COLLAGE DOTÉ D'UN SYSTÈME DE TRANSPORT

(30) Priorität: 18.07.2022 DE 102022117920
(43) Veröffentlichungstag der Anmeldung: 24.01.2024
(73) Patentinhaber: Müller Martini Holding AG, 6052 Hergiswil (CH)
(72) Erfinder: Rohlfing, Thomas, 32369 Rahden (DE)

(56) Entgegenhaltungen:
- EP-A1- 0 699 611
- DE-A1- 3 107 458

## Beschreibung

Die vorliegende Erfindung bezieht sich auf eine Vorrichtung zur Herstellung eines klebegebundenen Druckprodukts mit einem Transportsystem, in dem mehrere Transportklammern zur Beförderung eines jeweils in einer Transportklammer geklemmt gehaltenen Druckprodukts endlos in einer Kurvenbahn umlaufen und jede Transportklammer ein an einem Schwenkarm gehaltenes Klemmelement aufweist, das über den Schwenkarm zwischen einer Offenstellung und einer Klemmstellung hin und her beweglich ist, einem Lenkerarm, der an einem ersten Ende über eine Federdose mit dem Schwenkarm und an einem zweiten Ende mit einer ersten Stellvorrichtung verbunden ist, der Lenkerarm eine von der ersten Stellvorrichtung erzeugte erste Bewegungskomponente über die Federdose auf den Schwenkarm überträgt, die erste Bewegungskomponente in eine Richtung gerichtet ist, in der das verstellbare Klemmelement aus der Schließstellung in eine Offenstellung geschwenkt wird, wobei in der Federdose eine erste mechanischen Feder angeordnet ist, die in der Klemmstellung des Klemmelements über einen in der Federdose angeordneten Zuganker und den Schwenkarm eine Klemmkraft auf das geklemmt gehaltene Druckprodukt ausübt, und der Zuganker in der Klemmstellung des Klemmelements über eine mit dem Schwenkarm verbundene Koppelstange mittels einer Stauchung oder Dehnung der ersten mechanischen Feder unterschiedliche Dickenmaße des geklemmt gehaltenen Druckprodukts zwischen dem Schwenkarm und dem Lenkerarm ausgleicht.

Eine gattungsgemäße Vorrichtung ist aus der Schrift EP3954542 A1 bekannt. Dort ist eine Maschine zum Herstellen von klebegebundenen Druckprodukten, insbesondere Buchblocks, offenbart. Die Vorrichtung verfügt über ein Transportsystem, bei dem an einer endlos umlaufenden Klammerkette eine Anzahl von Transportklammern befestigt sind. Jede Transportklammer verfügt über eine Klammerbacke, die das schwenkbewegliche Klemmelement bildet. Die Klammerbacke wird im Bereich einer Einfuhrzone, in der ein Druckprodukt in die Transportklammer aufgenommen wird, nach dem Einführen des Druckprodukts in die Transportklammer geschlossen, um in der Schließstellung das Druckprodukt eingeklemmt zu halten. Mit dem Transportsystem wird das geklemmt in der Transportklammer gehaltene Druckprodukt dann durch die Vorrichtung transportiert, wobei das Druckprodukt auf dem Transportweg durch geeignete Maschinen bearbeitet wird. Hat das Druckprodukt alle in der Vorrichtung vorhandenen Bearbeitungsstationen passiert, kann es in einer Ausfuhrzone wieder aus der Vorrichtung ausgefördert werden. Dafür wird die Klammerbacke geöffnet, sodass das Druckprodukt in der Ausfuhrzone nicht mehr eingeklemmt in der Transportklammer gehalten ist.

Die Bewegungen der Klammerbacken werden über eine Kurvenbahn als ein Beispiel für eine erste Stellvorrichtung gesteuert, auf der für jede Transportklammer zumindest eine Rolle abrollt, die über einen Lenkerarm mit der zur jeweiligen Transportklammer gehörigen Klammerbacke verbunden ist. Indem die Kurvenbahn in ihrem Verlauf entlang der Transportstrecke des Druckprodukts durch die Vorrichtung ihre Ausrichtung und/oder ihre räumliche Lage im Verhältnis zum Verlauf der Transportkette oder der Klammer-Kurvenbahn verändert, erzeugt sie während einer Umlaufbewegung der Transportkette an den Stellen, an denen sich ihre Ausrichtung und/oder ihre räumliche Lage im Verhältnis zum Verlauf der Transportkette verändert, einen Verstellimpuls auf die auf ihr ablaufenden Rolle und den damit verbundenen Lenkerarm. Durch den Verstellimpuls als Bewegungskomponente verändert sich die Schwenkstellung der Klammerbacke in eine gewünschte, von der Stellvorrichtung vorgegebenen Richtung. Über die Ausrichtung und die räumliche Lage der Kurvenbahn entlang ihres Verlaufs können nicht nur die Öffnungs- und Schließbewegungen der Klammerbacke präzise gesteuert werden, die Klammerbacke kann auch in ihrer Offen- oder Schließstellung gehalten werden. Zwischen der Einfuhrzone und der Ausfuhrzone kann die jeweilige Klammerbacke auch über eine in der zugehörigen Transportklammer befindliche zusätzliche Verriegelungsvorrichtung in ihrer Schließstellung gehalten werden, so dass das Druckprodukt entlang seines Transportwegs durch die Vorrichtung und insbesondere während der Bearbeitung in der Vorrichtung geklemmt in der Transportklammer gehalten ist. Während des Transports ist das Druckprodukt von der Transportklammer beidseitig gut abgestützt und geführt.

Die Schließstellung der Klammerbacke kann sich individuell an das jeweilige Maß eines Druckprodukts anpassen. Um in der Vorrichtung Druckprodukte mit einer unterschiedlichen Dicke verarbeiten zu können, ohne dafür in jedem Fall die Transportklammern auf ein passendes Maß umstellen zu müssen, ist in der Schrift EP3954542 A1 offenbart, zwischen dem Lenkerarm und dem Schwenkarm, an dem die Klammerbacke befestigt ist, eine mechanische Spannfeder als einem längenvariablen Verbinder anzuordnen, deren Spannkraft gegen die Schließbewegung der Klammerbacke gerichtet ist und die demgemäß ab dem Aufsetzen der Klammerbacke auf ein geklemmt zu haltendes Druckprodukt eine Spannkraft aufbaut, mit der das Druckprodukt in der Transportklammer gehalten ist. Die drehbare Lagerung des Schwenkarms auf einer Drehachse und das Drehgelenk zwischen dem Schwenkarm und der starr mit dem Lenkerarm verbundenen Federdose ermöglichen es also, den Schwenkarm relativ zum Lenkerarm zu verdrehen, während die mechanische Spannfeder den Schwenkarm über ihre Spannkraft in einer Ausgangsstellung hält, aber auch eine Einfederbewegung zulässt, wenn das Klemmelement auf ein Druckprodukt aufgedrückt wird. Setzt die Klammerbacke in einer Schließbewegung früh auf ein geklemmt zu haltendes Druckprodukt auf, weil dieses besonders dick ist, kann der Lenkerarm gleichwohl weiter in seine von der Kurvenbahn vorgegebene maximale Schließstellung verschwenkt werden, weil sich dabei der Schwenkarm mit der daran befestigten Klammerbacke nicht mehr weiter auf das Druckprodukt zu bewegt, sondern die Schwenkbewegung des Lenkerarms in die mechanische Spannfeder eingeleitet wird, deren Länge sich so verändert, wie es dem Übersetzungsverhältnis der vom Lenkerarm erzeugten Bewegungskomponente über die Hebelarme des Schwenkarms vom Klemmelement bis zur Drehachse des Schwenkarms und des Schwenkarms von der Drehachse des Schwenkarms bis zur Verbindung mit der Federdose entspricht. Dabei ist die Spannfeder so dimensioniert, dass sie eine gewünschte Spannkraft bei Blockdicken zwischen beispielsweise 1 mm und 30 mm annähernd gleich hält. Unterschiedliche Dicken der Druckprodukte kann die Spannfeder also auf diese Weise über ihren Einfederweg hinweg kompensieren. Andere Auslegungen der Spannfeder sind möglich. In diesem Dickenbereich ist dann keine individuelle Nachjustierung der Einstellung erforderlich. Der längenvariable Verbinder übt in der Schließstellung des Klemmelements eine Klemmkraft auf das Druckprodukt aus.

Je nach Format, Dicke und Papierart des Druckprodukts ist es nicht gänzlich ausgeschlossen, dass ein Druckprodukt nach dem Öffnen der Klammerbacke nicht mehr ausreichend zusammengehalten wird und unkontrolliert aus der Transportklammer herausrutschen könnte, bevor es von einem nachgeordneten Fördersystem übernommen, gestützt und abgefördert wird. Dieses Problem kann sich insbesondere bei Transportsystemen stellen, bei denen die Klemmbacke über einen längeren Verstellweg bewegt wird, um ein Druckprodukt in eine Transportklammer aufnehmen oder dieses wieder abgeben zu können, weil die Klemmbacke in solchen Transportsystemen einen vergleichsweise weiten Verstellweg zurücklegen muss, der bei in einer solchen Vorrichtung üblichen Fördergeschwindigkeiten mit einer zwangsgeführten Kurvenbahnsteuerung nicht beliebig ausgestaltet werden kann. Während die Klemmbacke ein dickes Druckprodukt noch geklemmt hält, während die erste Stellvorrichtung den Lenkerarm bereits in eine Offenstellung bewegt, weil die Öffnungsbewegung des Lenkerarms im Verhältnis zum Schwenkarm über die mechanische Feder kompensiert wird, führt dieselbe Bewegung des Lenkerarms in Richtung der Offenstellung bei einem dünnen Druckprodukt nahezu unmittelbar dazu, dass das Klemmelement von dem Druckprodukt abgehoben wird und dieses dadurch bei der weiteren Öffnungsbewegung nicht mehr geklemmt gehalten ist, weil die geringe Dicke des Druckprodukts auch nicht über die mechanische Feder kompensiert worden ist. Das Bewegungsprofil, das eine zwangssteuernde Kurvenbahn vorgibt, stellt deshalb bei einer gattungsgemäßen Kompensation der unterschiedlichen Dicken von Druckprodukten über eine mechanische Feder immer einen Kompromiss zwischen verschiedenen möglichen Bewegungsprofilen dar, die für jeweils unterschiedliche Formate von Druckprodukten ein Bewegungsoptimum darstellen.

Das Dokument EP 0 699 611 A1 offenbart eine Vorrichtung zur Herstellung eines klebegebundenen Druckprodukts.

Der Erfindung liegt deshalb die Aufgabe zugrunde, die Öffnungsbewegung des Klemmelements wahlweise veränderlich ausgestalten zu können, um dadurch die Abstützung eines Druckprodukts auch mit einem ausgefalleneren Format, insbesondere was die Blockdicke angeht, in der Ausfuhrzone zu verbessern.

Die Aufgabe wird gelöst, indem die Vorrichtung eine zweite wahlweise aktivierbare Stellvorrichtung aufweist, die in einer aktivierten Stellung eine zweite Bewegungskomponente erzeugt, die auf den Schwenkarm einwirkt, wobei die zweite Bewegungskomponente der von der ersten Bewegungskomponente induzierten Aufschwenkbewegung des Lenkerarms entgegen gerichtet ist, und die einander entgegen gerichteten Bewegungskomponenten über eine zweite mechanische Feder kompensiert werden, die den Schwenkarm gegenüber dem Lenkerarm abstützt.

In der erfindungsgemäßen Vorrichtung erfolgt die Steuerung der Öffnungs- und Schließbewegung des Lenkerarms und des damit über eine Drehachse und eine Federdose verbundenen Schwenkarms mit dem daran befestigten Klemmelement über das erste Stellelement auf dieselbe Weise, wie es bereits aus dem Stand der Technik bekannt ist. Dabei kann der Schwenkarm auf die bekannte Weise gegen eine in der Federdose befindliche mechanische Feder einfedern, um dadurch unterschiedliche Dicken von in der Transportklammer gehaltenen Druckprodukten auszugleichen. Der zweite Stellvorrichtung schafft aber nun die Möglichkeit, eine von der ersten Stellvorrichtung induzierte Öffnungsbewegung des Lenkerarms in seiner Auswirkung auf die tatsächliche Öffnungsbewegung des Schwenkarms und damit auf die Bewegung des Klemmelements variabel auszugestalten, auch wenn die primäre Öffnungsbewegung durch die erste Stellvorrichtung unveränderlich zwangsgesteuert und nicht variabel ist. Der Lenkerarm bewegt sich also immer so, wie es die erste Stellvorrichtung vorgibt, und die Bewegung des mit dem Lenkerarm verbundenen Schwenkarms ist davon abhängig, ob die zweiten Stellvorrichtung aktiviert ist oder nicht und somit auf ihn die zweite Bewegungskomponente einwirkt oder nicht.

Insbesondere bei dünneren Druckprodukten oder bei Druckprodukten mit sehr glatten Oberflächen können die Öffnungsbewegungen durch die der Bewegungsrichtung der von der ersten Stellvorrichtung erzeugten ersten Bewegungskomponente entgegengesetzte zweite Bewegungskomponente ganz neutralisiert oder zumindest verlangsamt werden, um die Zeitphase zu verkürzen, in denen das Druckprodukt nicht fest eingeklemmt in der Transportklammer gehalten und abgestützt ist. Auch ist es möglich, die zweite Bewegungskomponente so auszugestalten, dass das Klemmelement zwar nicht mehr auf das Druckprodukt gepresst, aber in einem geringen Abstand dazu gehalten ist, so dass sich noch immer eine gute Abstützung des Druckprodukts ergibt, bevor es an das nachgeordnete Abförderorgan abgegeben wird. Die von der zweiten Stellvorrichtung erzeugte Bewegungskomponente wird dazu auf einen passenden Wert eingestellt, sie kann auch über den Verlauf einer Öffnungsbewegung des Schwenkarms variabel sein.

Die Bewegungskomponenten der beiden Stellvorrichtungen heben sich je nach ihrer Ausgestaltung zumindest über eine gewisse Zeitphase zumindest teilweise gegeneinander auf, so dass sich das Klemmelement entweder überhaupt nicht oder zumindest langsamer öffnet, wenn und solange die zweite Stellvorrichtung die von ihr erzeugte zweite Bewegungskomponente in den Bewegungsablauf des Schwenkarms mit dem daran befestigten Klemmelement einbringt. Der Zeitpunkt, zu dem die Transportklammer während ihres Umlaufs die Klemmkraft verringert, teilweise öffnet und damit zumindest um ein geringes Maß von einem Druckprodukt abgehoben wird, bevor es von einem Abförderorgan übernommen wird, oder ganz auf eine von der ersten Stellvorrichtung vorgegebene maximale Breite öffnet, kann durch die Bewegungskomponente der zweiten Stellvorrichtung nach hinten verlagert oder auf eine sonstige Weise vorteilhaft beeinflusst werden.

Indem die zweite Stellvorrichtung wahlweise aktivierbar ist, kann die zweite Bewegungskomponente dann in die Öffnungsbewegung des Schwenkarms eingebracht werden, wenn diese gewünscht ist. Wenn beispielsweise dünne Druckprodukte in der Vorrichtung verarbeitet werden, wird die zweite Bewegungskomponente gebraucht, um das jeweilige Druckprodukt länger in der Transportklammer zu halten, bevor es an ein nachgeordnetes Abförderorgan übergeben wird. Anders ist das bei dicken Druckprodukten, bei denen die Transportklammer sowieso im Verhältnis zu den dünnen Druckprodukten sehr spät öffnet: hier macht eine weitere Verzögerung der Öffnungsbewegung keinen Sinn und wäre möglicherweise kontraproduktiv für eine störungsfreie Übergabe des Druckprodukts an ein nachgeordnetes Abförderorgan. Wenn die zweite Stellvorrichtung dann deaktiviert ist, reicht die Steuerung der Öffnungsbewegung des Schwenkarms durch die erste Stellvorrichtung vollkommen aus. Die Aktivierung der zweiten Stellvorrichtung kann mittels der Eingabe eines Stellbefehls durch eine Bedienperson erfolgen, oder die zweite Stellvorrichtung wird softwaregesteuert und automatisiert aktiviert, beispielsweise mittels eines Softwareprogramms, das anhand der Blockdicke des bearbeiteten Druckprodukts entscheidet, ob die zweite Stellvorrichtung aktiviert wird oder nicht.

Die zweite Stellvorrichtung kann beliebig ausgestaltet werden, beispielsweise auch als eine mit der Grundmaschine fest verbundene Kulissenbahn, auf der eine Stützrolle abrollt, die einen starr mit dem Schwenkarm verbundenen Hebelarm betätigt, der bei einer Veränderung seiner Schwenkstellung eine Bewegungskomponente in den Schwenkarm einbringt. Die zweite Stellvorrichtung wird dabei so ausgestaltet, dass sie die zweite Bewegungskomponente so in den Öffnungsablauf der Transportklammer einbringt, wie es erforderlich ist, um eine verbesserte Übergabe auch dünner Druckprodukte und/oder von Druckprodukten mit einem glatten Papier zu erreichen.

Da die ersten und zweiten Bewegungskomponenten gegeneinander gerichtet sind, indem die erste Bewegungskomponente den Lenkerarm aufschwenkt und die zweite Bewegungskomponente den Schwenkarm in Richtung der Schließstellung bewegt, müssen diese gegenläufigen Bewegungen durch ein bewegliches Bauelement kompensiert werden, um Schäden an den Bauteilen der Transportklammer zu vermeiden. Das ist über eine zweite mechanische Feder möglich, die den Schwenkarm gegenüber dem Lenkerarm abstützt. Die mechanische Feder stellt ein längenvariables Bauelement dar, das dazu geeignet ist, die gegenläufigen Bewegungen durch eine Längenveränderung zu kompensieren. Mechanische Federn können von ihrer Federkennlinie her genau zum jeweiligen Anwendungsfall passend ausgelegt werden. Sie arbeiten nahezu wartungsfrei und benötigen keinen separaten Antrieb. Sie sind kompakt und können leicht in eine jeweilige Transportklammer eingebaut werden.

Bei der Längenveränderung bauen sich in der mechanischen Feder Rückstellkräfte auf, die dazu genutzt werden können, den Schwenkarm selbsttätig wieder in seine Ausgangsstellung zurückzubewegen, wenn die zweite Bewegungskomponente wegfällt. Je nach Anordnungsweise wird die zweite Feder durch die zweite Bewegungskomponente in ihrer Einbaulage komprimiert oder gedehnt.

Grundsätzlich ist es für die Umsetzung der vorliegenden Erfindung auch möglich, anstelle einer mechanischen Feder auch andere längenvariable Elemente als Verbinder zu verwenden, beispielsweise aktiv kraftbetätigt in der Länge verstellbare Elemente, wie beispielsweise durch einen starken Magneten, einen Elektromotor oder einen Hydraulikmotor, als Schlauch oder sonstiger Körper aus einem elastischen Material, einen an eine hydraulische oder pneumatische Blase gekoppelten Verstellzylinder oder ein elektrisch angetriebenes Stellelement. Dabei kann es aber schwierig sein, die anstelle einer Feder verwendeten Elemente mit einer Antriebskraft zu versorgen.

Nach einer Ausgestaltung der Erfindung ist die zweite mechanische Feder in der Federdose angeordnet, die zweite Stellvorrichtung ist in ihrer aktivierten Stellung über den Schwenkarm mit der zweiten mechanischen Feder an ihrem ersten Ende und die zweite mechanische Feder ist an ihrem zweiten Ende über die Abstützplatte des Zugankers mit der ersten mechanischen Feder verbunden. Wenn sich die zweite Stellvorrichtung in ihrer inaktivierten Stellung befindet, erzeugt sie keine Bewegungskomponente auf den Schwenkarm und ist somit auch nicht mit der zweiten mechanischen Feder verbunden. Befindet sich die zweite Stellvorrichtung in ihrer aktivierten Stellung und bringt dadurch eine Bewegungskomponente in die Schwenkbewegung des Schwenkarms ein, summieren die beiden mechanischen Federn die Bewegungskomponenten, die die ersten und zweiten Stellvorrichtungen jeweils erzeugen, in der Federdose miteinander auf. Da die miteinander verbundenen mechanischen Federn längenvariabel sind, ist es möglich, über das Ausdehnen und/oder Zusammenziehen der Federn in der Federdose eine Stellbewegung des Klemmelements zu erzeugen, die sich aus der Summe der von den ersten und zweiten Stellvorrichtungen erzeugten Bewegungskomponenten zusammensetzt. Bei einer von der ersten Stellvorrichtung erzeugten Schließ- und Öffnungsbewegung bewegen sich die mechanischen Federn über den Zuganker gleichsinnig, soweit sich dabei der Schwenkarm relativ zum Lenkerarm bewegt. Wenn die zweite Stellvorrichtung eine zweite Bewegungskomponente im Rahmen einer Öffnungsbewegung erzeugt, bewegt sich die zweite mechanische Feder unabhängig von der ersten mechanischen Feder um das Maß, das die zweite Bewegungskomponente auf den Schwenkarm einwirkt, gegebenenfalls korrigiert um ein Übersetzungsverhältnis aus dem Schwenkarm.

Nach einer Ausgestaltung der Erfindung weist der Zuganker eine Koppelstange auf, die an ihrem der Abstützplatte abgewandten Ende über ein Drehgelenk mit dem Schwenkarm fest verbunden ist, das Drehgelenk ist an einem Gelenkkopf gehalten, der starr mit dem Schwenkarm verbunden ist und dessen räumliche Lage sich im Verhältnis zur Federdose bei Relativbewegungen zwischen dem Lenkerarm und dem Schwenkarm verändert, die erste mechanische Feder ist auf ihrer dem Gelenkkopf zugewandten Seite von einer an ihrem äußeren Rand fest mit der Wandung der Federdose verbundene Lochscheibe in ihrer Einbaulage gehalten, die Koppelstange ist durch das in der Lochscheibe befindliche Loch hindurchgeführt, die zweite mechanische Feder ist auf ihrer dem Gelenkkopf zugewandten Seite auf einer Hülse abgestützt, die das in der Lochscheibe befindliche Loch durchgreift und entlang der Koppelstange verschiebbar gehalten ist, die Hülse ist in einer inaktivierten Stellung der zweiten Stellvorrichtung von der zweiten mechanischen Feder auf den Innenrand der Lochscheibe abgestützt gehalten und die Hülse ist in einer aktivierten Stellung der zweiten Stellvorrichtung vom Gelenkkopf vom Innenrand der Lochscheibe abgehoben und gegen die Federkraft der zweiten mechanischen Feder in den Innenraum der Federdose hinein gedrückt gehalten. Bei dieser Ausgestaltung der Verbindung des Lenkerarms mit dem Schwenkarm über die Federdose ist der dem Schwenkarm zugewandte Teil der Federdose so ausgebildet, dass sowohl der Zuganker die Spannkraft der beiden mechanischen Federn auf den Schwenkarm überträgt, wenn die erste Stellvorrichtung den Lenkerarm zusammen mit dem Schwenkarm und dem daran befestigten Klemmelement auf ein Druckprodukt aufsetzt, als auch der Gelenkkopf die Hülse um einen der zweiten Bewegungskomponente entsprechenden Stellweg in den Innenraum der Federdose hineindrückt, um dadurch den Hebel zu verkürzen, mit dem die Federdose den Schwenkarm am Lenkerarm hält. Über den verkürzten Stellweg wird die erste Bewegungskomponente teilweise oder ganz kompensiert, und zwar durch die vom Gelenkkopf auf die Hülse übertragene zweite Bewegungskomponente. Diese über die Federdose kombinierte Übertragung der ersten und, soweit vorhanden, auch der zweiten Bewegungskomponente auf den Schwenkarm ist auf eine technisch einfache, aber kostengünstige, mechanisch zuverlässig funktionierende und nahezu wartungsfreie Weise möglich.

Nach einer Ausgestaltung der Erfindung weisen die mechanischen Federn einen unterschiedlichen Kraft-Wegverlauf auf. Durch den unterschiedlichen Kraft-Wegverlauf wird verhindert, dass eine mechanische Feder auf eine Bewegungskomponente einer Stellvorrichtung reagiert, auf die diese Feder nicht reagieren soll. So wäre es unerwünscht, wenn nur die erste mechanische Feder aufgrund einer von der ersten Stellvorrichtung erzeugten Bewegungskomponente ihre Länge verändern soll, sich aber bei deren Betätigung auch die zweite mechanische Feder mitbewegt und in ihrer Länge verändert. Wenn beispielsweise die zweite mechanische Feder eine Federkennlinie mit einer Betätigungskraft aufweist, die erheblich kleiner ist als die Betätigungskraft für die erste mechanische Feder, verändert nur sie ihre Länge, wenn sie von der zweiten Stellvorrichtung angesprochen wird. Aus den unterschiedlichen Kraft-Wegeverläufen ergibt sich auf diese Weise ein eindeutiges Bewegungsverhalten, bei dem auf eine Bewegungskomponente nur diejenige Feder ihre Länge verändert, bei der das gewünscht ist. Insbesondere ist es bei einem unterschiedlichen Kraft-Wegverlauf auch möglich, die zweite mechanische Feder mit einer geringeren Federkraft auszustatten, so dass die zweite Stellvorrichtung nur eine entsprechend geringere Betätigungskraft erzeugen muss, um die zweite Bewegungskomponente in den Bewegungsablauf des Schwenkarms einzubringen. Durch die geringeren Betätigungskräfte ist die zweite Stellvorrichtung einem geringeren Verschleiß ausgesetzt, sie kann leichter und kostengünstiger gebaut werden, und die Stellbewegungen sind präziser, weil geringere Massen bewegt und geringere Kräfte erzeugt werden müssen.

Nach einer Ausgestaltung der Erfindung ist die zweite Stellvorrichtung als eine Kulissenbahn ausgebildet, die sich nur über eine Teilstrecke der Umlaufbewegung der Transportklammern in Umlaufrichtung erstreckt und mit einer Steuerrolle zusammenwirkt, die starr mit dem Schwenkarm verbunden ist. Die zweite Stellvorrichtung kann insbesondere nur im Bereich der Ausfuhrzone der Vorrichtung angeordnet sein. Damit können die Transportklammern in den übrigen Teilstrecken nur über die erste Stellvorrichtung gesteuert werden. Die Steuerrolle rollt nur bei einer aktivierten zweiten Stellvorrichtung auf der Kulissenbahn ab. Über eine auf einer Kulissenbahn abrollende Steuerrolle kann auf einfache, zuverlässige und präzise Weise eine zweite Bewegungskomponente auf den Schwenkarm erzeugt und übertragen werden. Kulissenbahnen mit Steuerrollen sind wartungsarm und weisen hohe Standzeiten auf.

Nach einer Ausgestaltung der Erfindung ist die Kulissenbahn der zweiten Stellvorrichtung in einer Haltevorrichtung verstellbar gehalten, wobei in zumindest einer der Stellpositionen die mit den Schwenkarmen der Transportklammern verbundenen Steuerrollen die Kulissenbahn kontaktlos passieren. Durch die verstellbare Halterung der zweiten Stellvorrichtung kann diese insbesondere zwischen verschiedenen Stellpositionen hin und her verlagert werden, bei denen die zweite Stellvorrichtung zumindest in einer der Stellpositionen keine Bewegungskomponente erzeugt und damit inaktiviert ist. In der inaktivierten Stellposition erzeugt die zweite Stellvorrichtung keine zweite Bewegungskomponente. Mit einer solchen Einstellung können beispielsweise Druckprodukte mit durchschnittlich oder überdurchschnittlich dicken Blockdicken hergestellt werden. Werden kritische Druckprodukte, beispielsweise solche mit einer sehr dünnen Blockdicke, mit der Vorrichtung verarbeitet, kann die zweite Stellvorrichtung in eine Stellposition verlagert werden, in der die Verlagerungsbewegung des ersten längenvariablen Verbinders zumindest teilweise kompensiert wird. Die Verstellung der zweiten Stellvorrichtung kann in Stufen oder stufenlos erfolgen. Über die Verlagerung der zweiten Stellvorrichtung in bestimmte Stellpositionen kann die Größe der Bewegungskomponente beeinflusst werden, die die zweite Stellvorrichtung in den Bewegungsablauf des Klemmelements einbringt. Aufsummiert mit der Bewegungskomponente, die die erste Stellvorrichtung erzeugt, ergibt sich bei einer passenden Positionierung der zweiten Stellvorrichtung ein Bewegungsprofil des Klammerelements, das optimal an die funktionalen Anforderungen des jeweils verarbeiteten Druckprodukts angepasst ist.

Nach einer Ausgestaltung der Erfindung weist die Haltevorrichtung einen motorischen Antrieb auf, mit dem die zweite Stellvorrichtung beweglich ist. Bei dem Antrieb kann es sich um einen elektrischen Spindeltrieb, einen hydraulischen Kolbenantrieb oder dergleichen handeln. Der motorische Antrieb kann insbesondere auch als Abstützung für die zweite Stellvorrichtung während ihrer Benutzung dienen. Mit dem motorischen Antrieb kann die zweite Stellvorrichtung, insbesondere die Kulissenbahn, auf eine Position gebracht werden, in der sie eine bestimmte Bewegungskomponente erzeugt, die ein Bewegungsprofil des Klammerelements schafft, das genau auf die funktionalen Anforderungen des jeweils verarbeiteten Druckprodukts angepasst ist.

Nach einer Ausgestaltung der Erfindung ist der motorische Antrieb mit einer elektronischen Fernsteuerung verbunden. Die Fernsteuerung kann beispielsweise eine bestimmte Sollgröße für die Stellposition der zweiten Stellvorrichtung bei der Verarbeitung eines Druckprodukts vorgeben, die für dieses Druckprodukt besonders geeignet ist. Die Fernsteuerung kann durch eine manuelle Eingabe eines Wertes für die Sollgröße in eine Bedienelektronik aktiviert werden, die Sollgröße kann aber auch automatisiert ermittelt werden, beispielsweise durch die Sensorwerte einer geeigneten Sensorik, die mit der Fernsteuerung verbunden ist, oder durch Formatangaben für das Druckprodukt, die aus einer vorhergehenden Bearbeitung des Druckprodukts herrühren oder die einem Speicher entnommen werden. Bei einer entsprechenden Einbindung der Fernsteuerung in die gesamte Steuerung und Regelung der Vorrichtung oder einer Maschinenkette, bei der die Vorrichtung eine Teilfunktion in der Herstellung eines Druckprodukts abdeckt, können entsprechende Verstellungen des motorischen Antriebs auch bei einer laufenden Maschine bis herunter zu einer Auflagengröße 1 ohne eine Betriebsunterbrechung der Vorrichtung vorgenommen werden.

Nach einer Ausgestaltung der Erfindung ist die Lauffläche der Kulissenbahn zumindest in einem Anlaufbereich aus einem schlagzähen Kunststoff gebildet. Der schlagzähe Kunststoff erzeugt weniger Betriebsgeräusche als eine Oberfläche aus einem metallischen Material. Ein schlagzäher Kunststoff ist aber auch nicht so elastisch, dass sich Schwingungen im Oberflächenmaterial oder der Bewegung der Koppelstange einstellen. Der schlagzähe Kunststoff kann faserverstärkt ausgeführt sein.

Weitere Abwandlungen und Ausgestaltungen der Erfindung lassen sich der nachfolgenden gegenständlichen Beschreibung, den Ansprüchen und den Zeichnungen entnehmen.

Die Erfindung soll nun anhand eines Ausführungsbeispiels näher beschrieben werden. Es zeigen:
- Fig. 1:: eine Ansicht auf eine Vorrichtung aus einer Perspektive von oben,
- Fig. 2:: eine Detailansicht auf eine Transportklammer in einer Öffnungszone,
- Fig. 3:: eine Schnittansicht einer Transportklammer mit einer Schnittansicht auf die Federdose,
- Fig. 4A und 4B:: Ausschnittvergrößerungen der oberen und unteren Enden der in Fig. 3 dargestellten Federdose,
- Fig. 5:: die Schnittansicht aus Fig. 3 mit einer veränderten Stellposition der ersten Stellvorrichtung,
- Fig. 6A und 6B:: Ausschnittvergrößerungen der oberen und unteren Enden der in Fig. 4 dargestellten Federdose,
- Fig. 7:: die Schnittansicht aus Fig. 3 mit einer weiter veränderten Stellposition der ersten Stellvorrichtung und einer zweiten Bewegungskomponente aus der zweiten Stellvorrichtung, und
- Fig. 8A und 8B:: Ausschnittvergrößerungen der oberen und unteren Enden der in Fig. 7 dargestellten Federdose.

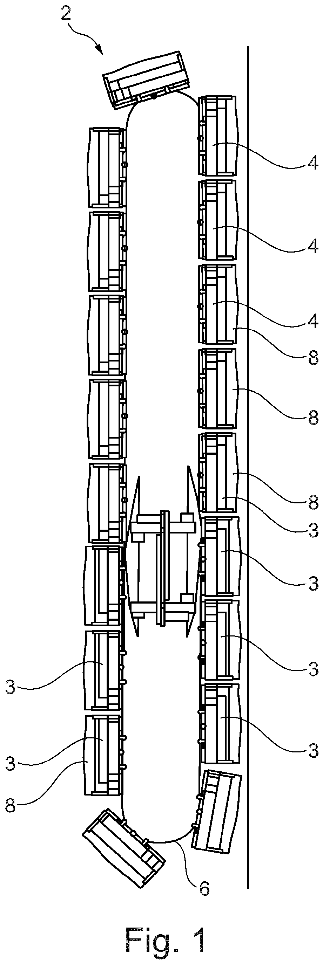

Die Fig. 1 zeigt eine Vorrichtung 2 zur Herstellung eines klebegebundenen Druckprodukts mit einem Transportsystem, in dem mehrere Transportklammern 4 zur Beförderung eines jeweils in einer Transportklammer 4 geklemmt gehaltenen Druckprodukts 3 endlos in einer Kurvenbahn 6 umlaufen und jede Transportklammer 4 ein verstellbares Klemmelement 8 aufweist, das zwischen einer Offenstellung und einer Klemmstellung hin und her beweglich ist.

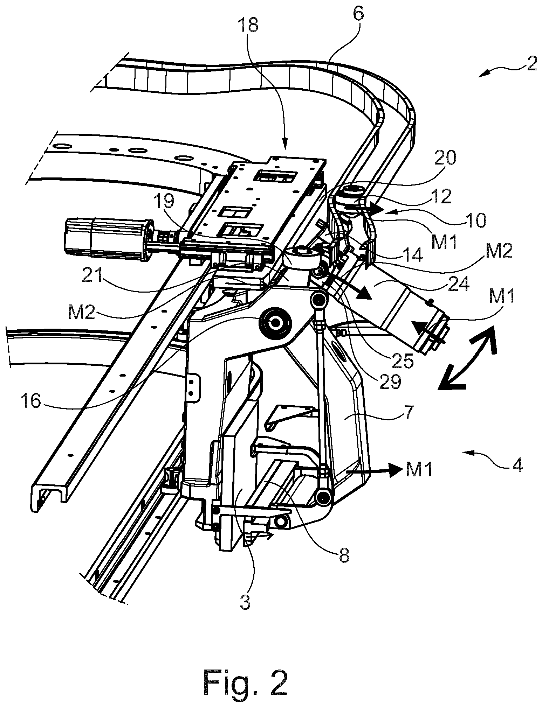

Die Verschwenkung des Klemmelements 8 wird permanent gesteuert durch den in Fig. 2 gezeigten Lenkerarm 14, der an seinem ersten Ende mit der Federdose 24 verbunden ist. Auf der Drehachse 16 ist der Schwenkarm 7 unabhängig vom Lenkerarm 14 drehbeweglich gelagert. Der Schwenkarm 7 ist über eine Lasche, an deren Ende sich ein Gelenkkopf 29 befindet, und ein Drehgelenk 25 mit der Federdose 24 verbunden. Am unteren Ende des Schwenkarms 7 ist das Klemmelement 8 angeordnet. An seinem zweiten Ende ist der Lenkerarm 14 mit einer Rolle 12 versehen, die bei einem Umlauf der Transportklammer 4 um die Kurvenbahn 6 entlang der Kurvenbahn 6 umläuft. Die Kurvenbahn 6 und die Rolle 12 bilden zusammen im Ausführungsbeispiel eine erste Stellvorrichtung 10. Die Schwenkbeweglichkeit des Lenkerarms 14 ist durch einen Doppelpfeil angedeutet. Bei einer Verlagerung der Rolle 12 in eine Richtung, die von der Bewegungsbahn der zugehörigen Transportklammer 4 abweicht, erzeugt diese eine erste Bewegungskomponente M1, die über den Lenkerarm 14 und die Federdose 24 auf den Schwenkarm 7 übertragen wird und der die Bewegungskomponente M1 in einer Schwenkbewegung umsetzt.

Das Klemmelement 8 ist in Fig. 2 in einer teilweise geöffneten Stellung gezeigt, in der das Klemmelement 8 noch nicht auf der Oberfläche des Druckprodukts 3 aufliegt. Aus dieser Stellung kann es bei einer fortgesetzten Öffnungsbewegung in die Pfeilrichtung nach rechts weiter aufgeschwenkt werden, um ein in der Transportklammer 4 befördertes Druckprodukt 3 an ein zeichnerisch nicht näher dargestelltes Abförderorgan abzugeben.

Die Vorrichtung 2 weist eine zweite Stellvorrichtung 18 zur Beeinflussung der räumlichen Lage des Klemmelements 8 auf. Die zweite Stellvorrichtung 18 erzeugt eine zweite Bewegungskomponente M2 in einer Richtung, die der Bewegungsrichtung der von der ersten Stellvorrichtung 10 erzeugten Bewegungskomponente entgegengesetzt ist. Um diese Bewegungskomponente erzeugen zu können, verfügt die zweite Stellvorrichtung 18 über eine Kulissenbahn 20, die in Förderrichtung der Transportklammern 4 nur über eine Teilstrecke einer Umlaufbewegung der Transportklammern 4 ausgebildet ist und dadurch auch nur auf dieser Teilstrecke eine entsprechende zweite Bewegungskomponente M2 erzeugt. Dies geschieht, indem eine Steuerrolle 19 bei ihrer Annäherung an die Kulissenbahn 20 auf diese aufläuft und dabei in eine Richtung gedrückt wird, die quer zur Förderrichtung der Transportklammer 4 liegt. Die Steuerrolle 19 ist fest mit einem Hebelarm 21 verbunden, der die von der Steuerrolle 19 erzeugte zweite Bewegungskomponente auf den Schwenkarm 7 überträgt.

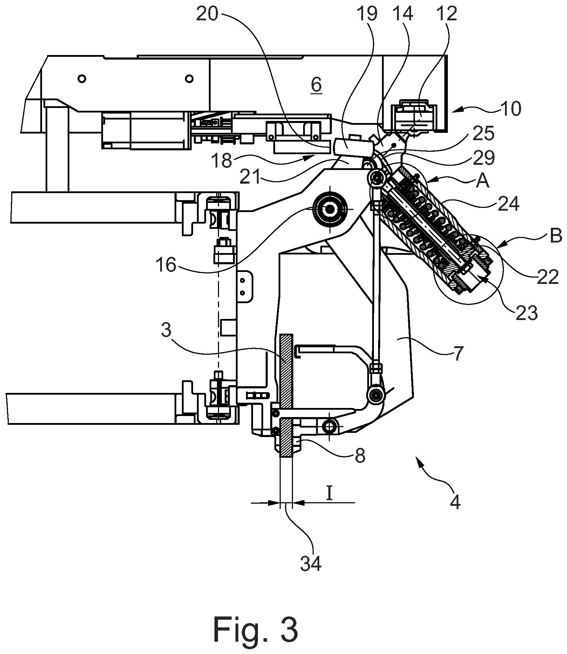

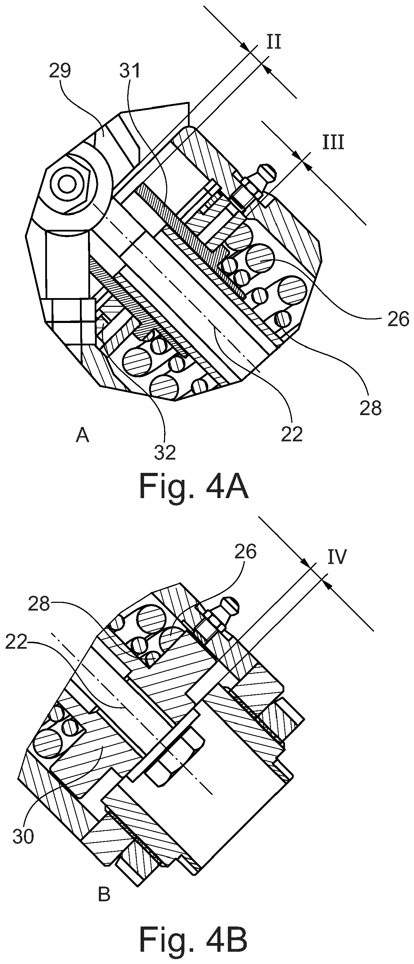

Die Fig. 3 zeigt eine Schnittansicht einer Transportklammer 4 mit einer Schnittansicht auf die Federdose 24, die Fig. 4A und 4B zeigen Ausschnittvergrößerungen der oberen und unteren Enden der in Fig. 3 dargestellten Federdose 24. In Fig. 3 befindet sich die zweite Stellvorrichtung 18 in einer inaktiven Stellung, was an dem Freiraum zwischen der Oberfläche der Kulissenbahn 20 und der Steuerrolle 19 erkennbar ist. Demgemäß wird in die Steuerung der Schwenkbewegung des Schwenkarms 7 keine zweite Bewegungskomponente M2 eingebracht. Die in Fig. 3 gezeigte Schwenklage des Schwenkarms 7 ist allein bestimmt durch die erste Bewegungskomponente M1 aus der ersten Stellvorrichtung 10.

In der in Fig. 3 gezeigten Schwenkstellung des Schwenkarms 7 ist das Klemmelement 8 an die Oberfläche eines Druckprodukts 3 angedrückt gehalten. Der Abstand des Klemmelements 8 zur gegenüberliegenden Anlagefläche der Transportklammer 4 entspricht an der Position I dem Dickenmaß 34 des Druckprodukts 3. Der Anpressdruck, mit dem das Klemmelement 8 auf dem Druckprodukt 3 gehalten wird, ergibt sich aus der Kraft, mit der ein Zuganker 23 mechanischen Federn 26, 28 zusammendrückt. Die Funktionsweise des Zugankers 23 ist gut anhand der Fig. 4A und 4B nachvollziehbar. Durch den ersten Teil einer Andrückbewegung des Lenkerarms 14 wird das Klemmelement 8 zunächst nur auf die Oberfläche des Druckprodukts 3 aufgesetzt. Wenn der Lenkerarm 14 seine Andrückbewegung jedoch im zweiten Teil fortsetzt, knickt der Schwenkarm 7 mit einer Drehbewegung um die Drehachse 16 der Transportklammer 4 im Verhältnis zum Lenkerarm 14 ein, wobei eine Abstützplatte 30, auf deren Innenseite sich die Enden von zwei mechanischen Federn 26,28 abstützen, vom Schwenkarm 7 über einen Gelenkkopf 29 und ein Drehgelenk 25 über die Koppelstange 22 von ihrem Sitz nach innen in die Federdose 24 eingezogen wird. Die Koppelstange 22 ist über das Drehgelenk 25 drehbeweglich, aber fest mit dem Schwenkarm 7 über den Gelenkkopf 29 verbunden. Der Abstand, den die Abstützplatte 30 in ihrer eingezogenen Stellung von ihrem Sitz hat, ist an der Position IV in der vergrößerten Ansicht B in Fig. 4B erkennbar. Hat ein Druckprodukt 3 eine größeres Dickenmaß 34 als in Fig. 3 gezeigt, muss der Zuganker 23 eine größere restliche Bewegungsstrecke des Lenkerarms 14 aufnehmen, bis der Lenkerarm 14 nach dem Aufsetzen des Klemmelements 8 auf das Druckprodukt 3 seine Endlage erreicht hat, und die Abstützplatte 30 wird dadurch tiefer in die Federdose 24 eingezogen. Bei dünnen Druckprodukten 3 taucht die Abstützplatte 30 weniger tief oder überhaupt nicht in die Federdose 24 ein, wenn sich die Transportklammer 4 schließt.

Der Abstand, den die Abstützplatte 30 von ihrem Sitz hat, entspricht dabei dem Abstand, den der Gelenkkopf 29 von einer Hülse 31 hat und der an der Position I I in der Fig. 4A erkennbar ist. Die Hülse 31 ist in axialer Richtung beweglich auf die Koppelstange 22 aufgesetzt. Sie wird in ihrer in Fig. 4A gezeigten Position von der zweiten mechanischen Feder 28 gegen die Innenseite einer Lochscheibe 32 gedrückt gehalten, so dass der Abstand des äußeren Sitzrings der Hülse 31 zur Innenoberfläche der Lochscheibe 32 gleich null beträgt, wie an Position III in Fig. 4A gezeigt ist. Da bei der in Fig. 3 gezeigten Schwenkstellung der Schwenkarms 7 auch keine zweite Bewegungskomponente einwirkt, besteht kein Bedarf, einen verkürzten Stellweg zwischen den ersten und zweiten Bewegungskomponenten auszugleichen.

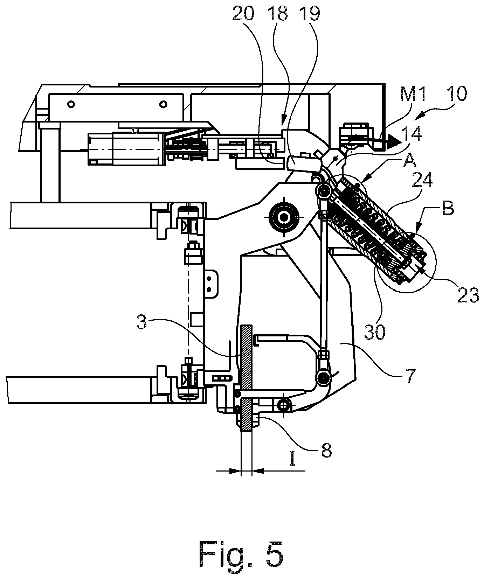

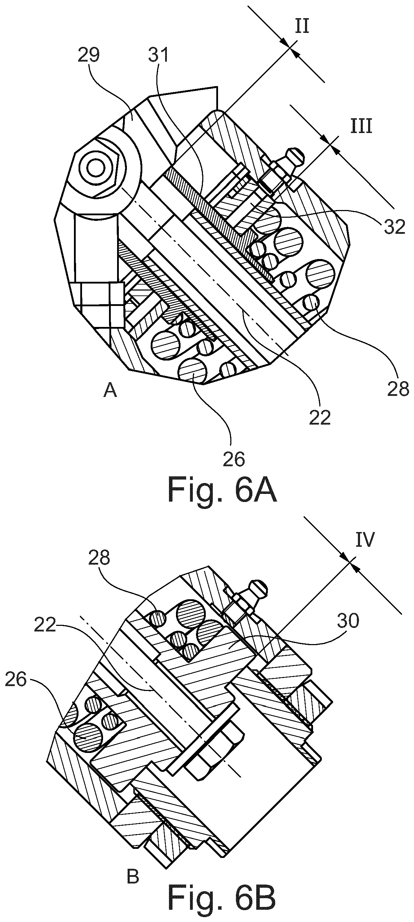

Die Fig. 5 zeigt die Schnittansicht aus Fig. 3 mit einer dazu veränderten Stellposition der ersten Stellvorrichtung 10 nach einer ersten Bewegungskomponente M1 in Richtung einer Öffnung der Transportklammer 4. Die zweite Stellvorrichtung 18 ist dabei weiterhin inaktiv, wie aus dem Spalt wischen der Steuerrolle 19 und der Kulissenbahn 20 ersichtlich ist. Wenn sich der Lenkerarm 14 von der ersten Stellvorrichtung 10 und der davon induzierten ersten Bewegungskomponente M1 gesteuert wieder öffnet, bewegt sich zunächst die Abstützplatte 30 des Zugankers 23 wieder zurück auf ihren Sitz, wenn sie sich zuvor beim Schließen der Transportklammer 4 von ihrem Sitz entfernt hat, bevor der Schwenkarm 7 seine Öffnungsbewegung beginnt. Die Schwenkstellung, in der sich der Schwenkarm 7 dann befindet, ist in Fig. 5 gezeigt. Das Klemmelement 8 liegt an der Position I noch weiter auf der Oberfläche des Druckprodukts 3 auf, die Lage des Schwenkarms 7 hat sich gegenüber der in Fig. 3 gezeigten Position in der in Fig. 5 gezeigten Position noch nicht verändert. Wie die vergrößerten Ansichten in den Fig. 6A und 6B aber zeigen, hat sich die Abstützplatte 30 wieder auf ihren Sitz in der Federdose 24 zurückbewegt, wie in der Position IV in Fig. 6B gezeigt, und auch der Abstand zwischen dem Gelenkkopf 29 und der Stirnfläche der Hülse 31 hat sich auf null verringert, wie aus der Position II in Fig. 6A ersichtlich ist. Nicht bewegt hat sich die Hülse 31, die mit ihrem Sitzring weiterhin mit einem Abstand null auf der Lochscheibe 32 gehalten ist, wie aus dem eingezeichneten Abstand an der Position III in Fig. 6A erkennbar ist.

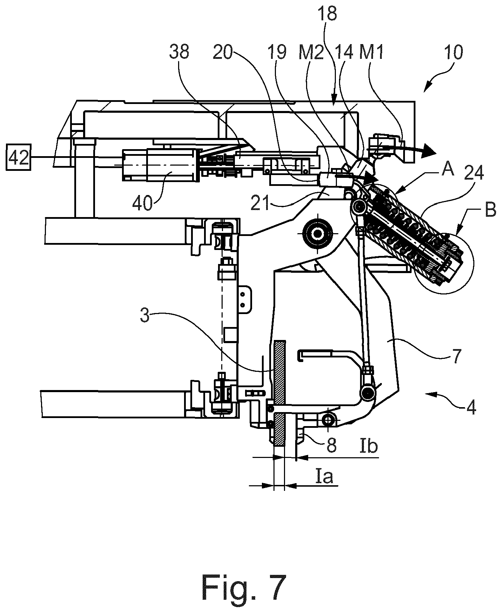

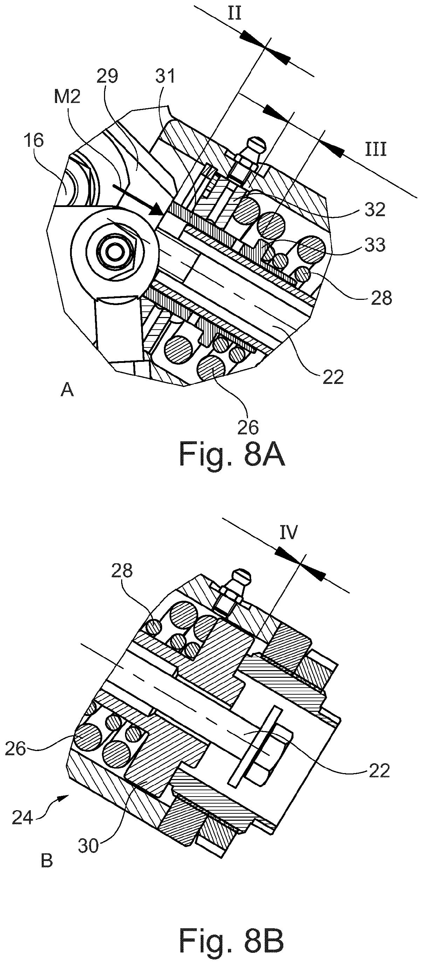

Die Fig. 7 zeigt die Schnittansicht aus Fig. 3 mit einer weiter veränderten Stellposition der ersten Stellvorrichtung 10 und einer zweiten Bewegungskomponente M2 aus der zweiten Stellvorrichtung 18. In Fig. 7 ist erkennbar, dass die Steuerrolle 19 nun auf die Kulissenbahn 20 aufgesetzt ist, so dass die zweite Steuervorrichtung 18 nun eine zweite Bewegungskomponente M2 in die Bewegung des Schwenkarms 7 einbringt. Auch die erste Stellvorrichtung 10 hat sich gegenüber der Position in Fig. 5 weiter in Richtung der Öffnung der Transportklammer 4 bewegt. Da die Abstützplatte 30 in Fig. 5 bereits wieder ihren Sitz in der Federdose 24 erreicht hatte und diesen auch in der Schwenkstellung beibehält, die in Fig. 7 gezeigt ist, wie an Position IV in Fig. 8B erkennbar ist, ist der Schwenkarm 7 durch die weiter fortgeschrittene Öffnungsbewegung des Lenkerarms 7 zumindest teilweise weiter geöffnet worden, wie aus dem inzwischen erreichten Abstand des Klemmelements 8 von der Oberfläche des Druckprodukts 3 erkennbar ist, der in Fig. 7 an der Position Ib eingezeichnet ist. Wie aber insbesondere aus der Fig. 8B erkennbar ist, hat der Gelenkkopf 29 bei der weiteren Aufschwenkbewegung des Schwenkarms 7 durch die zweite Bewegungskomponente M2 die Hülse 31 an ihrer Stirnseite nach innen in die Federdose 24 eingedrückt, so dass der Sitzring der Hülse 31 von der Lochscheibe 32 nach innen in die Federdose 24 hinein abgehoben ist, wie das an Position III in Fig. 8A eingezeichnete Abstandsmaß zeigt. Um das Maß, um das die Hülse 31 in die Federdose 24 eingedrückt ist, fällt die Öffnungsbewegung des Schwenkarms 7 geringer aus, wobei sich dabei noch Differenzen aus unterschiedlich langen Hebelarmen im Schwenkarm 7 ergeben können. So hat die zweite Stellvorrichtung 18, soweit aktiviert, eine zweite Bewegungskomponente M2 erzeugt, die auf den Schwenkarm 7 einwirkt, wobei die zweite Bewegungskomponente M2 der von der ersten Bewegungskomponente M1 induzierten Aufschwenkbewegung des Lenkerarms 14 entgegen gerichtet ist. Die einander entgegen gerichteten Bewegungskomponenten M1, M2 werden über die zweite mechanische Feder 28 kompensiert, die den Schwenkarm 7 gegenüber dem Lenkerarm 14 abstützt.

In Fig. 7 ist gezeigt, dass die zweite Stellvorrichtung 18 in einer Haltevorrichtung 38 verstellbar gehalten ist. Wenn die zweite Stellvorrichtung 18 so weit zurückgezogen wird, dass die Kulissenbahn 20 keinen Kontakt mehr zur Steuerrolle 19 hat, befindet sie sich in einer Stellposition, in der die zweite Stellvorrichtung 18 bei einer Passage einer Transportklammer 4 positionsbedingt keine Bewegungskomponente erzeugt. Die Vorrichtung 2 kann dann allein mit der Bewegungskomponente aus der ersten Stellvorrichtung 10 betrieben werden. Die Haltevorrichtung 38 weist einen motorischen Antrieb 40 auf, mit dem die zweite Stellvorrichtung 18 beweglich ist. Der motorische Antrieb 40 ist mit einer elektronischen Fernsteuerung 42 verbunden.

Die Erfindung ist nicht auf das vorstehend beschriebene Ausführungsbeispiel beschränkt. Der Fachmann kann das beschriebene Ausführungsbeispiel unter Zuhilfenahme seines ihm verfügbaren Fachwissens auf eine ihm sinnvoll erscheinende Weise innerhalb des Definitionsbereichs der Ansprüche abwandeln, um sie an einen konkreten Anwendungsfall anzupassen

## Patentansprüche

1. Vorrichtung (2) zur Herstellung eines klebegebundenen Druckprodukts (3) mit einem Transportsystem, in dem mehrere Transportklammern (4) zur Beförderung eines jeweils in einer Transportklammer (4) geklemmt gehaltenen Druckprodukts (3) endlos in einer Kurvenbahn (6) umlaufen und jede Transportklammer (4) ein an einem Schwenkarm (7) gehaltenes Klemmelement (8) aufweist, das über den Schwenkarm (7) zwischen einer Offenstellung und einer Klemmstellung hin und her beweglich ist, einem Lenkerarm (14), der an einem ersten Ende über eine Federdose (24) mit dem Schwenkarm (7) und an einem zweiten Ende mit einer ersten Stellvorrichtung (10) verbunden ist, der Lenkerarm (14) eine von der ersten Stellvorrichtung (10) erzeugte erste Bewegungskomponente (M1) über die Federdose (24) auf den Schwenkarm (7) überträgt, die erste Bewegungskomponente (M1) in eine Richtung gerichtet ist, in der das verstellbare Klemmelement (8) aus der Schließstellung in eine Offenstellung geschwenkt wird, wobei in der Federdose (24) eine erste mechanischen Feder (26) angeordnet ist, die in der Klemmstellung des Klemmelements (8) über einen in der Federdose (24) angeordneten Zuganker (23) und den Schwenkarm (7) eine Klemmkraft auf das geklemmt gehaltene Druckprodukt (3) ausübt, und der Zuganker (23) in der Klemmstellung des Klemmelements (8) über eine mit dem Schwenkarm (7) verbundene Koppelstange (22) mittels einer Stauchung oder Dehnung der ersten mechanischen Feder (26) unterschiedliche Dickenmaße des geklemmt gehaltenen Druckprodukts (3) zwischen dem Schwenkarm (7) und dem Lenkerarm (14) ausgleicht, **dadurch gekennzeichnet, dass** die Vorrichtung (2) eine zweite wahlweise aktivierbare Stellvorrichtung (18) aufweist, die in einer aktivierten Stellung eine zweite Bewegungskomponente (M2) erzeugt, die auf den Schwenkarm (7) einwirkt, wobei die zweite Bewegungskomponente (M2) der von der ersten Bewegungskomponente (M1) induzierten Aufschwenkbewegung des Lenkerarms (14) entgegen gerichtet ist, und die einander entgegen gerichteten Bewegungskomponenten (M1, M2) über eine zweite mechanische Feder (28) kompensiert werden, die den Schwenkarm (7) gegenüber dem Lenkerarm (14) abstützt.

2. Vorrichtung (2) nach Anspruch 1, **dadurch gekennzeichnet, dass** die zweite mechanische Feder (28) in der Federdose (24) angeordnet ist, die zweite Stellvorrichtung (18) in ihrer aktivierten Stellung über den Schwenkarm (7) mit der zweiten mechanischen Feder (28) an ihrem ersten Ende und die zweite mechanische Feder (28) an ihrem zweiten Ende über die Abstützplatte (30) des Zugankers (23) mit der ersten mechanischen Feder (26) verbunden ist.

3. Vorrichtung (2) nach Anspruch 2, **dadurch gekennzeichnet, dass** der Zuganker (23) eine Koppelstange (22) aufweist, die an ihrem der Abstützplatte (30) abgewandten Ende über ein Drehgelenk (25) mit dem Schwenkarm (7) fest verbunden ist, das Drehgelenk (25) an einem Gelenkkopf (29) gehalten ist, der starr mit dem Schwenkarm (7) verbunden ist und dessen räumliche Lage sich im Verhältnis zur Federdose (24) bei Relativbewegungen zwischen dem Lenkerarm (14) und dem Schwenkarm (7) verändert, die erste mechanische Feder (26) auf ihrer dem Gelenkkopf (29) zugewandten Seite von einer an ihrem äußeren Rand fest mit der Wandung der Federdose (24) verbundene Lochscheibe (32) in ihrer Einbaulage gehalten ist, die Koppelstange (22) durch das in der Lochscheibe (32) befindliche Loch hindurchgeführt ist, die zweite mechanische Feder (28) auf ihrer dem Gelenkkopf (29) zugewandten Seite auf einer Hülse (31) abgestützt ist, die das in der Lochscheibe (32) befindliche Loch durchgreift und entlang der Koppelstange (22) verschiebbar gehalten ist, die Hülse (31) in einer inaktivierten Stellung der zweiten Stellvorrichtung (18) von der zweiten mechanischen Feder (28) auf den Innenrand der Lochscheibe (32) abgestützt gehalten ist und die Hülse (31) in einer aktivierten Stellung der zweiten Stellvorrichtung (18) vom Gelenckopf (29) vom Innenrand der Lochscheibe (32) abgehoben und gegen die Federkraft der zweiten mechanischen Feder (28) in den Innenraum der Federdose (24) hinein gedrückt gehalten ist.

4. Vorrichtung (2) nach einem der vorhergehenden Ansprüche, **dadurch gekennzeichnet, dass** die mechanischen Federn (26, 28) einen unterschiedlichen Kraft-Wegverlauf aufweisen.

5. Vorrichtung (2) nach einem der vorhergehenden Ansprüche, **dadurch gekennzeichnet, dass** die zweite Stellvorrichtung (18) als eine Kulissenbahn (20) ausgebildet ist, die sich nur über eine Teilstrecke der Umlaufbewegung der Transportklammern (4) in Umlaufrichtung erstreckt und mit einer Steuerrolle (19) zusammenwirkt, die starr mit dem Schwenkarm (7) verbunden ist.

6. Vorrichtung (2) nach Anspruch 5, **dadurch gekennzeichnet, dass** die Kulissenbahn (20) der zweiten Stellvorrichtung (18) in einer Haltevorrichtung verstellbar gehalten, wobei in zumindest einer der Stellpositionen die mit den Schwenkarmen (7) der Transportklammern (4) verbundenen Steuerrollen (19) die Kulissenbahn (20) kontaktlos passieren.

7. Vorrichtung (2) nach Anspruch 6, **dadurch gekennzeichnet, dass** die Haltevorrichtung (38) einen motorischen Antrieb (40) aufweist, mit dem die zweite Stellvorrichtung (18) beweglich ist.

8. Vorrichtung (2) nach Anspruch 7, **dadurch gekennzeichnet, dass** der motorische Antrieb (40) mit einer elektronischen Fernsteuerung (42) verbunden ist.

9. Vorrichtung (2) nach Anspruch 8, **dadurch gekennzeichnet, dass** die Lauffläche der Kulissenbahn (20) zumindest in einem Anlaufbereich aus einem schlagzähen Kunststoff gebildet ist.

## Claims

1. Device (2) for producing an adhesive-bound printed product (3), with a transport system in which a plurality of transport clamps (4) for conveying a printed product (3) held clamped in each case in a transport clamp (4) endlessly circulate on a curved track (6), and each transport clamp (4) has a clamping element (8) which is held on a swivel arm (7) and is movable to and fro between an open position and a clamping position via the swivel arm (7), a control arm (14) which is connected at a first end to the swivel arm (7) via a spring capsule (24) and at a second end to a first adjusting device (10), the control arm (14) transmits a first movement component (M1), which is generated by the first adjusting device (10), via the spring capsule (24) to the swivel arm (7), the first movement component (M1) is directed in a direction in which the adjustable clamping element (8) is pivoted from the closed position into an open position, wherein a first mechanical spring (26) is arranged in the spring capsule (24), the spring, in the clamping position of the clamping element (8), exerting a clamping force via a tension rod (23), which is arranged in the spring capsule (24), and the swivel arm (7) on the printed product (3), which is held clamped, and, in the clamping position of the clamping element (8), the tension rod (23) compensating via a coupling rod (22) connected to the swivel arm (7), by means of compression or extension of the first mechanical spring (26), for different thickness dimensions of the printed product (3), which is held clamped, between the swivel arm (7) and the control arm (14), **characterized in that** the device (2) has a second optionally activatable adjusting device (18) which, in an activated position, generates a second movement component (M2) which acts on the swivel arm (7), wherein the second movement component (M2) is directed counter to the swivelling-open movement of the control arm (14) that is induced by the first movement component (M1), and the movement components (M1, M2) which are directed counter to each other are compensated for via a second mechanical spring (28) which supports the swivel arm (7) in relation to the control arm (14).

2. Device (2) according to Claim 1, **characterized in that** the second mechanical spring (28) is arranged in the spring capsule (24), the second adjusting device (18), in its activated position, is connected via the swivel arm (7) to the second mechanical spring (28) at its first end, and the second mechanical spring (28) is connected at its second end via the supporting plate (30) of the tension rod (23) to the first mechanical spring (26).

3. Device (2) according to Claim 2, **characterized in that** the tension rod (23) has a coupling rod (22) which, at its end facing away from the supporting plate (30), is fixedly connected to the swivel arm (7) via a rotary joint (25), the rotary joint (25) is held at a joint head (29), which is rigidly connected to the swivel arm (7) and the spatial position of which changes in relation to the spring capsule (24) during relative movements between the control arm (14) and the swivel arm (7), the first mechanical spring (26), on its side facing the joint head (29), is held in its installed position by a perforated disc (32), which is connected fixedly at its outer edge to the wall of the spring capsule (24), the coupling rod (22) is guided through the hole located in the perforated disc (32), the second mechanical spring (28), on its side facing the joint head (29), is supported on a sleeve (31) which reaches through the hole located in the perforated disc (32) and is held displaceably along the coupling rod (22), the sleeve (31), in an inactivated position of the second adjusting device (18), is held supported on the inner edge of the perforated disc (32) by the second mechanical spring (28), and the sleeve (31), in an activated position of the second adjusting device (18), is lifted off from the inner edge of the perforated disc (32) by the joint head (29) and held pressed into the interior of the spring capsule (24) counter to the spring force of the second mechanical spring (28).

4. Device (2) according to one of the preceding claims, **characterized in that** the mechanical springs (26, 28) have a different force/travel profile.

5. Device (2) according to one of the preceding claims, **characterized in that** the second adjusting device (18) is designed as a slotted guide track (20) which extends in the circulating direction only over a partial section of the circulating movement of the transport clamps (4) and interacts with a control roller (19), which is rigidly connected to the swivel arm (7).

6. Device (2) according to Claim 5, **characterized in that** the slotted guide track (20) of the second adjusting device (18) is held adjustably in a holding device, wherein, in at least one of the adjusting positions, the control rollers (19) which are connected to the swivel arms (7) of the transport clamps (4) pass the slotted guide track (20) without contact.

7. Device (2) according to Claim 6, **characterized in that** the holding device (38) has a motorized drive (40) with which the second adjusting device (18) is movable.

8. Device (2) according to Claim 7, **characterized in that** the motorized drive (40) is connected to an electronic remote controller (42).

9. Device (2) according to Claim 8, **characterized in that** the running surface of the slotted guide track (20) is formed at least in a starting region from an impactresistant plastic.

## Revendications

1. Dispositif (2) dévolu à la fabrication d'un produit imprimé (3) à reliure par encollage, comprenant un système de transport dans lequel plusieurs pinces de transport (4), affectées au convoyage d'un produit imprimé (3) retenu par coincement dans une pince de transport (4) respective, accomplissent une révolution sans fin dans une piste curviligne (6), et chaque pince de transport (4) comporte un élément de coincement (8) maintenu sur un bras pivotant (7) et apte à effectuer, par l'intermédiaire dudit bras pivotant (7), un mouvement de va-et-vient entre une position d'ouverture et une position de coincement, un bras directeur (14) étant relié audit bras pivotant (7) à une première extrémité, par l'intermédiaire d'une boîte (24) à ressorts, et à un premier dispositif de réglage (10) à une seconde extrémité, ledit bras directeur (14) répercutant sur ledit bras pivotant (7), par l'entremise de ladite boîte (24) à ressorts, une première composante de mouvement (M1) engendrée par ledit premier dispositif de réglage (10), laquelle première composante de mouvement (M1) pointe dans une direction dans laquelle des pivotements sont imprimés à l'élément de coincement (8) réglable, de la position de fermeture à une position d'ouverture, sachant qu'un premier ressort mécanique (26) logé dans la boîte (24) à ressorts applique dans la position de coincement de l'élément de coincement (8), par l'intermédiaire dudit bras pivotant (7) et d'un tirant (23) intégré dans ladite boîte (24) à ressorts, une force de coincement au produit imprimé (3) retenu par coincement, et sachant que ledit tirant (23) compense dans ladite position de coincement dudit élément de coincement (8), par l'intermédiaire d'une tige d'accouplement (22) reliée audit bras pivotant (7), moyennant une compression ou une expansion dudit premier ressort mécanique (26), différentes cotes d'épaisseur dudit produit imprimé (3), retenu par coincement, entre ledit bras pivotant (7) et ledit bras directeur (14), **caractérisé par le fait que** ledit dispositif (2) est pourvu d'un second dispositif de réglage (18) qui est activable sélectivement et engendre, dans une position activée, une seconde composante de mouvement (M2) agissant sur le bras pivotant (7), ladite seconde composante de mouvement (M2) étant dirigée en sens inverse du mouvement de pivotement ascendant du bras directeur (14), induit par la première composante de mouvement (M1), et lesdites composantes de mouvement (M1, M2), dirigées à l'opposé l'une de l'autre, étant contrebalancées par l'intermédiaire d'un second ressort mécanique (28) qui procure un appui audit bras pivotant (7) par rapport audit bras directeur (14).

2. Dispositif (2) selon la revendication 1, **caractérisé par le fait que** le second ressort mécanique (28) est logé dans la boîte (24) à ressorts, le second dispositif de réglage (18) occupant sa position activée étant relié, par l'intermédiaire du bras pivotant (7), au second ressort mécanique (28) à sa première extrémité, et ledit second ressort mécanique (28) étant relié au premier ressort mécanique (26), à sa seconde extrémité, par l'entremise de la platine d'appui (30) du tirant (23).

3. Dispositif (2) selon la revendication 2, **caractérisé par le fait que** le tirant (23) est muni d'une tige d'accouplement (22) reliée fermement au bras pivotant (7), par l'intermédiaire d'une articulation tournante (25), à son extrémité pointant à l'opposé de la platine d'appui (30), ladite articulation tournante (25) étant maintenue sur une tête d'articulation (29) qui est reliée rigidement audit bras pivotant (7) et dont la position dans l'espace varie, relativement à la boîte (24) à ressorts, lors de mouvements relatifs entre le bras directeur (14) et ledit bras pivotant (7), sachant que le premier ressort mécanique (26) est maintenu dans sa position d'intégration, sur son côté pointant vers ladite tête d'articulation (29), par un disque perforé (32) relié fermement, au niveau de son bord extérieur, à la paroi de ladite boîte (24) à ressorts, ladite tige d'accouplement (22) étant guidée de part en part à travers le trou pratiqué dans ledit disque perforé (32), le second ressort mécanique (28) étant en appui, sur son côté tourné vers ladite tête d'articulation (29), sur un manchon (31) qui traverse ledit trou pratiqué dans le disque perforé (32) et est maintenu mobile le long de ladite tige d'accouplement (22), sachant que, dans une position inactivée du second dispositif de réglage (18), le manchon (31) est maintenu en appui, par ledit second ressort mécanique (28), sur le bord intérieur dudit disque perforé (32) et que, dans une position activée dudit second dispositif de réglage (18), ledit manchon (31) est soulevé, par ladite tête d'articulation (29), à l'écart dudit bord intérieur du disque perforé (32) et est maintenu pressé vers l'espace interne de ladite boîte (24) à ressorts, en opposition à la force élastique dudit second ressort mécanique (28).

4. Dispositif (2) selon l'une des revendications précédentes, **caractérisé par le fait que** les ressorts mécaniques (26, 28) présentent des profils de trajectoires de forces différents.

5. Dispositif (2) selon l'une des revendications précédentes, **caractérisé par le fait que** le second dispositif de réglage (18) est réalisé sous la forme d'une piste de glissement (20) qui s'étend uniquement sur un trajet partiel du mouvement révolutif des pinces de transport (4), dans la direction de la révolution, et coopère avec un galet de commande (19) relié rigidement au bras pivotant (7).

6. Dispositif (2) selon la revendication 5, **caractérisé par le fait que** la piste de glissement (20) du second dispositif de réglage (18) est maintenue réglable dans un dispositif de retenue, sachant que les galets de commande (19), reliés rigidement aux bras pivotants (7) des pinces de transport (4), franchissent ladite piste de glissement (20) avec absence de contact en au moins l'un des emplacements de réglage.

7. Dispositif (2) selon la revendication 6, **caractérisé par le fait que** le dispositif de retenue (38) est équipé d'un entraînement motorisé (40) par lequel le second dispositif de réglage (18) peut être mû.

8. Dispositif (2) selon la revendication 7, **caractérisé par le fait que** l'entraînement motorisé (40) est raccordé à une télécommande électronique (42).

9. Dispositif (2) selon la revendication 8, **caractérisé par le fait que** la surface de roulement de la piste de glissement (20) est constituée d'une matière plastique résistante aux chocs, au moins dans une zone de démarrage.
